# EUROPEAN PATENT SPECIFICATION

(11) **EP 0 427 416 B1**
(45) Date of publication and mention of the grant of the patent: **14.08.1996**
(21) Application number: 90311549.1
(22) Date of filing: 22.10.1990
(51) Int. Cl.: H04M 1/26, H04M 1/50

(54) **Sensing exchange signalling requirements**
Erfassung der Signalisierungserfordernisse einer Vermittlungsanlage
Détection des spécifications de signalisation d'un central

(30) Priority: 09.11.1989 GB 8925296
(43) Date of publication of application: 15.05.1991
(73) Proprietor: NORTHERN TELECOM LIMITED, Montreal, Quebec H2Y 3Y4 (CA)
(72) Inventor: Barnes, George John Preston, Harlow, Essex CM 17 0HF (GB); Verrells, Michael Vincent, Harlow, Essex CM 17 0DL (GB)
(74) Representative: Dennis, Mark Charles

(56) References cited:
- GB-A- 2 016 869
- PATENT ABSTRACTS OF JAPAN vol. 12, no. 72 (E-588)5 March 1988 & JP-A-62213354
- PATENT ABSTRACTS OF JAPAN vol. 13, no. 195 (E-754)10 May 1989 & JP-A-1016156
- PATENT ABSTRACTS OF JAPAN vol. 10, no. 309 (E-447)21 October 1986 & JP-A-61121553
- PATENT ABSTRACTS OF JAPAN vol. 12, no. 261 (E-636)22 July 1988 & JP-A-63045946
- PATENT ABSTRACTS OF JAPAN vol. 12, no. 351 (E-660)20 September 1988 & JP-A-63107341
- PATENT ABSTRACTS OF JAPAN vol. 9, no. 102 (E-312)(1825) 4 May 1985 & JP-A-59228453

## Description

This invention relates to dual standard signalling telephone instruments.

In the United Kingdom at the present time there is a programme of telephone exchange replacement in which the previously traditional exchanges having "loop disconnect" (LD) signalling from subscribers equipments are being replaced by new electronic exchanges which require "multifrequency" (MF) signalling from subscriber equipment. Because there currently exists, and will continue to exist for some time to come, a dual signalling standard network various subscriber equipments are being produced that incorporate both types of signalling facilities which are switch selectable by the subscriber. Such equipments are popular for subscribers because, since the recent liberalisation of the telephone system, more and more subscribers are purchasing their own telephones and wish to be able to use them no matter to which type of exchange they are connected. This is particularly advantageous when the subscriber is connected to an older LD exchange which is later replaced by a MF exchange, since the subscriber does not have to then purchase a new telephone. Also if the subscriber moves to an area served by a different type of exchange he can continue to use his existing telephone since relocation and reconnection are simply a matter of plugging the telephone into a socket. GB-A-2016869 (Roche) provides a telephone station with automatic switch over between pulse code dialling and multifrequency code dialling.

However, there are problems arising out of the development of such switched dual standard telephones. One main problem is that subscribers can alter the setting of the switch(es) accidentally or while "experimenting" with the telephone, often resulting in a call out of the public switched network (PSTN) engineer.

According to the present invention there is provided a dual signalling standard subscriber's telephone equipment including means wherein the equipment is initially set to perform dialling signalling in a first mode, including means responsive to initiation of the handset 'OFF-HOOK' condition to determine the presence or absence of significant line signal for a predetermined period of time, means responsive to the output of the determining means to reset the equipment to the first or a second mode for performing subsequent dialling signalling, characterised in that the means to determine the presence or absence of line signal includes means responsive to the 'OFF-HOOK' condition to sample the line signal peak amplitude for a first predetermined period of time, means for storing the first signal level occurring during the sampling period, means responsive to release of the first dialling key to re-enable periodically the sampling means, means for comparing the periodic samples of the line signal with the stored sample to determine presence or absence of significant line signal for a predetermined period of time whereby if at least a "gap" in the line signal (dial tone) is detected during a second predetermined time period immediately following the release of the first dial key press, the telephone is set to the first mode, whereas if no such "gap" is found, the equipment is set to the alternative, second signalling mode.

According to a preferred embodiment of the invention the equipment includes means for retaining the reset dialling mode so long as the equipment remains connected to the exchange line, the equipment being set to the first mode when disconnected from the line and reconnected to the same or another line.

Embodiments of the invention will now be described with reference to the accompanying drawings in which:-
Fig. 1 is a block diagram of an autosensing dual signalling standard telephone equipment,
Fig. 2 is a flow diagram of the operations carried out in the autosensing telephone equipment of Fig. 1, and
Fig. 3 is a timing diagram relating to the flow diagram of Fig. 2.

Experiments have shown that even when an equipment is connected to a PABX and dialling in the correct mode, after dialling a first 'access' digit to gain access to an external PSTN line there is a significant, albeit brief, detectable virtual loss of signal on the subscriber's line before dial tone is replaced by the same or another dial tone.

Therefore autosensing of the signalling requirements, i.e. loop disconnect (LD) or multifrequency (MF) signalling, is based on the fact that after dialling of the first digit there will be either:-
a) a complete loss of dial tone on the subscriber's line when the equipment is connected direct to a public switched telephone network (PSTN) exchange, or
b) a brief temporary loss of dial tone on the subscriber's line when the equipment is connected to a local private automatic branch exchange (PABX)
if in both cases the equipment is dialling in the mode, LD or MF, required by the exchange. If the equipment is dialling in the wrong mode then the exchange will not respond by removing dial tone from the line.

Therefore in one embodiment of the invention, to determine whether an exchange will respond to MF or LD dialling a first, single digit of the wanted number is transmitted in MF format and the equipment looks for a gap in the line signal immediately following the digit tones. Because of the variability of different exchanges and the existence of transients on the lines a 'gap' is defined as a given short period of time, e.g. 25ms, within a longer period of time, e.g. 600ms, following the transmission of the digital tones in which the amplitude of the line signal is significantly less than that of the first dial tone, i.e. the dial tone preceding transmission of the first digit.

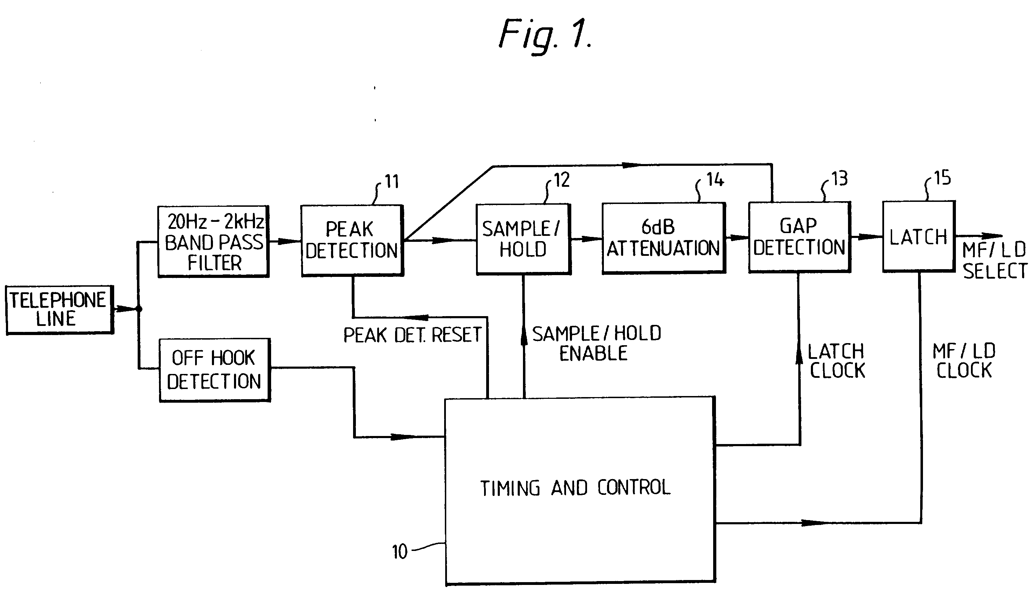

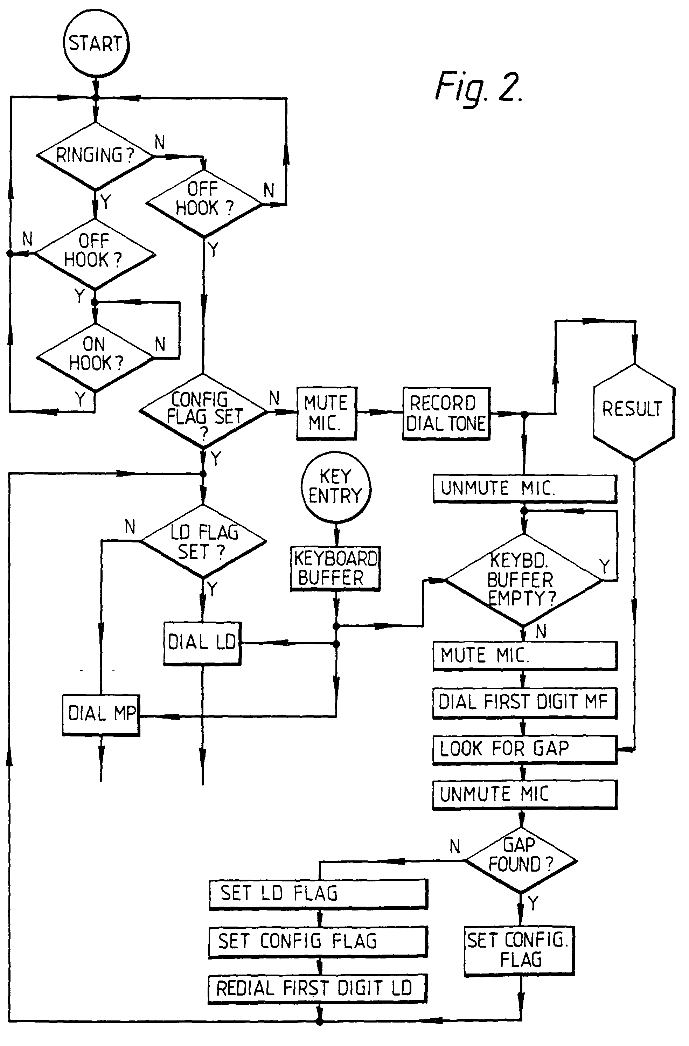

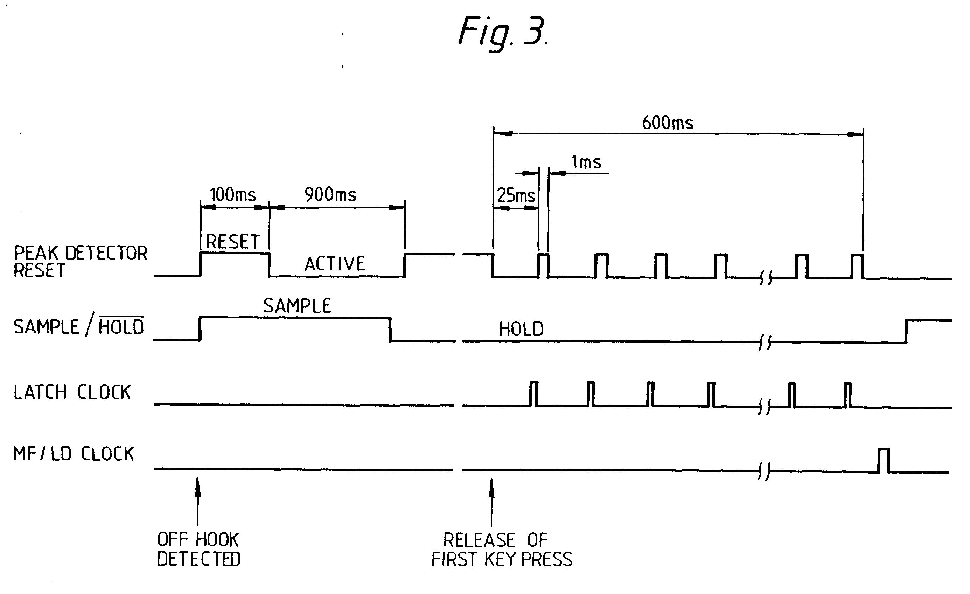

Referring to the drawings, the first time that the handset is lifted 'OFF-HOOK' after the equipment is installed, the timing and control circuitry 10 (Fig. 1) initiates a sequence of events shown in Figs. 2 and 3. To begin with the circuitry checks whether a 'configuration' flag is set. This flag will not be set if the equipment is newly installed and will be set if this is not the first time that the equipment has accessed the exchange since installation. If the configuration flag is not set the circuitry mutes the microphone for a short period of time e.g. 900ms, during which a peak detection circuit 11 is enabled. During this time the peak amplitude of the filtered line signal, i.e. the dial tone, is measured. At the end of this period the sample and hold circuit 12 is taken to the 'hold' mode and records the peak signal occurring during this period. This period must be long enough so that certain special dial tones, (e.g. 750ms tone; 750ms silence, used for indicating that certain PABX facilities have been activated), may be properly characterised. During this sequence the microphone is muted so that unwanted audio signals are not interpreted as dial tone. The microphone is then unmuted.

The release of the first dial key press (which must not occur until the initial signal measurement sequence is completed) initiates the sequence shown in the second half of the timing diagram. The peak detector circuit 11 is re-enabled for a further short period, e.g. 25ms, and at the end of this period the maximum signal level found is compared in gap detector 13 with a signal which is half the amplitude of the original dial tone, which is obtained from the hold circuit via a 6dB attenuator 14. If the newly detected signal is less than half the original dial tone a 'gap' is deemed to have occurred. The peak detector is reset and another 25ms measurement period is started. This search for a gap continues for, say, 600ms. At the end of this time the output of the gap detection circuit is latched and, depending on the output of the gap detection circuit, the equipment is set, i.e. configured, to the correct signalling mode. If a gap is detected then this is indicative that the exchange has responded to MF signalling so the configuration flag is 'set' without altering the signalling mode of the equipment. If no gap is found then this is indicative that the exchange has not responded to MF signalling and so the equipment is set to the LD signalling mode and the configuration flag is set. The output of the gap detection circuit is held in latch 15 so long as the equipment remains connected to the exchange line and the line voltage is maintained. Therefore, once the equipment has been configured to the correct signalling mode it will remain in that mode until such time as it is unplugged from the line and re-installed, at which time it will default to the MF mode and repeat the autosensing sequence. Finally, if the equipment is re-configured to the LD mode the first digit is re-dialled, since the exchange will not have responded to the first dialling of the first digit. In the MF mode the exchange will have already responded to the first digit so re-dialling is not required.

It should be noted that although the autosensing sequence requires a comparatively long period of time, e.g. 1-2 seconds, this is no serious inconvenience to the user since it occurs only on the first dialling attempt after plugging into the line socket. Since the dialling mode is thereafter 'frozen' (indicated in the flow diagram by the 'configuration flag' being set) the correct signalling requirement for the exchange is maintained for the duration of the equipment connection and normal dialling procedures prevail.

## Claims

1. A dual signalling standard subscriber's telephone equipment comprising means wherein the equipment is initially set to perform dialling signalling in a first mode; means (10-13) responsive to initiation of the handset 'OFF-HOOK' condition to determine the presence or absence of significant line signal for a predetermined period of time ; means (15) responsive to the output of the determining means to reset the equipment to the first or a second mode for performing subsequent dialling signalling, characterised in that the means to determine the presence or absence of line signal includes means responsive to the 'OFF-HOOK' condition to sample the line signal peak amplitude for a first predetermined period of time, means for storing the first signal level occurring during the sampling period, means responsive to release of the first dialling key to re-enable periodically the sampling means, means for comparing the periodic samples of the line signal with the stored sample to determine presence or absence of significant line signal for a predetermined period of time whereby if at least a "gap" in the line signal (dial tone) is detected during a second predetermined time period immediately following the release of the first dial key press, the telephone is set to the first mode, whereas if no such "gap" is found, the equipment is set to the alternative, second signalling mode.

2. An equipment according to claim 1 further including means for retaining the reset dialling mode so long as the equipment remains connected to the exchange line, the equipment being set to the first mode when disconnected from the line and reconnected to the same or another line.

3. An equipment according to claim 1 or 2 characterised in that said first signalling mode is multifrequency (MF) and said second signalling mode is loop disconnected (LD).

4. An equipment according to claim 3 when dependent on claim 2 including means for muting the equipment microphone during at least said first predetermined period of time.

## Patentansprüche

1. Teilnehmer-Telefongerät für zwei Signalisierungsnormen, mit Einrichtungen, die das Gerät am Anfang zur Durchführung der Wahl-Signalisierung in einer ersten Betriebsart einstellen; Einrichtungen, die auf den Beginn des Hörer-'Abgehoben'-Zustandes ansprechen, um das Vorhandensein oder Fehlen eines kennzeichnenden Leitungssignals für ein vorherbestimmtes Zeitintervall festzustellen (10-13); Einrichtungen, die auf das Ausgangssignal der Feststellungseinrichtungen ansprechen, um das Gerät auf die erste oder eine zweite Betriebsart (15) zurückzusetzen, um die nachfolgende Wahl-Signalisierung durchzuführen,
dadurch gekennzeichnet, daß die Einrichtungen zur Feststellung des Vorhandenseins oder Fehlens von Leitungssignalen Einrichtungen, die auf den 'Abgehoben'-Zustand ansprechen, um die Spitzenamplitude des Leitungssignals für ein vorherbestimmtes Zeitintervall abzutasten, Einrichtungen zur Speicherung des ersten Signalpegels, der während des ersten Abtastzeitintervalls auftritt, Einrichtungen, die auf das Loslassen der ersten Wähltaste ansprechen, um die Abtasteinrichtungen periodisch wieder auszulösen, und Einrichtungen zum Vergleich der periodischen Abtastungen des Leitungssignals mit der gespeicherten Abtastung einschließt, um das Vorhandensein oder Fehlen von kennzeichnenden Leitungssignalen für ein vorherbestimmtes Zeitintervall festzustellen, wobei, wenn wenigstens eine 'Lücke' in dem Leitungssignal (Wählton) während eines zweiten vorherbestimmten Zeitintervalls festgestellt wird, das unmittelbar auf das Loslassen der ersten gedrückten Wähltaste folgt, das Telefon auf die erste Betriebsart gesetzt wird, während das Gerät auf die alternative zweite Signalisierungsbetriebsart gesetzt wird, wenn keine derartige 'Lücke' festgestellt wird.

2. Gerät nach Anspruch 1, das weiterhin Einrichtungen einschließt, um die eingestellte Wähl-Betriebsart solange beizubehalten, wie das Gerät an die Vermittlungsstellenleitung angeschlossen bleibt, wobei das Gerät auf die erste Betriebsart gesetzt wird, wenn es von der Leitung getrennt und an dieselbe oder eine andere Leitung wieder angeschlossen wird.

3. Gerät nach Anspruch 1 oder 2,
dadurch gekennzeichnet, daß die erste Signalisierungs-Betriebsart Mehrfrequenzwahl (MF) und die zweite SignalisierungsBetriebsart Impulswahl (LD) ist.

4. Gerät nach Anspruch 3, unter Rückbeziehung auf Anspruch 2, das Einrichtungen einschließt, um das Gerätemikrophon wenigstens während des ersten vorherbestimmten Zeitintervalls abzuschalten.

## Revendications

1. Equipement téléphonique d'abonné à double norme de signalisation, comprenant un dispositif dans lequel l'équipement est réglé initialement afin qu'il effectue la signalisation de numérotation dans un premier mode, un dispositif commandé par le déclenchement de la condition du combiné "décroché" afin qu'il détermine la présence ou l'absence du signal principal de ligne pendant une période prédéterminée (10-13), et un dispositif commandé par le signal de sortie du dispositif de détermination et destiné à réarmer l'équipement au premier ou à un second mode (15) pour l'exécution de la signalisation de numérotation ultérieure, caractérisé en ce que le dispositif de détermination de la présence ou de l'absence du signal de ligne comprend un dispositif commandé par l'état "décroché" et destiné à échantillonner l'amplitude de crête du signal de ligne pendant une première période prédéterminée, un dispositif destiné à mémoriser le premier niveau du signal apparaissant pendant la période d'échantillonnage, un dispositif commandé par la libération de la première touche de numérotation et destiné à remettre périodiquement le dispositif d'échantillonnage à un état validé, et un dispositif destiné à comparer les échantillons périodiques du signal de ligne à l'échantillon mémorisé pour déterminer la présence ou l'absence d'un signal principal de ligne pendant une période prédéterminée, si bien que, si au moins un "espace" du signal de ligne de "tonalité de numérotation" est détecté pendant une seconde période prédéterminée qui suit immédiatement la libération de la pression de la première touche de numérotation, le téléphone est mis dans le premier mode alors que, si aucun "espace" n'est déterminé, l'équipement est mis dans le second mode différent de signalisation.

2. Equipement selon la revendication 1, comprenant en outre un dispositif destiné à retenir le mode de signalisation rétabli tant que l'équipement reste connecté à la ligne du central, l'équipement étant réglé au premier mode lorsqu'il est déconnecté de la ligne et reconnecté à la même ligne ou à une autre ligne.

3. Equipement selon la revendication 1 ou 2, caractérisé en ce que le premier mode de signalisation est le mode multifréquence (MF) et le second mode de signalisation est le mode de déconnexion de boucle (LD).

4. Equipement selon la revendication 3 lorsqu'elle dépend de la revendication 2, comprenant un dispositif rendant silencieux le microphone de l'équipement pendant la première période prédéterminée au moins.
